(19) **Europäisches Patentamt**

**European Patent Office**

**Office européen des brevets**

(11) **EP 0 849 654 B1**

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(51) Int Cl.⁷: **G05B 19/401**

(21) Anmeldenummer: **97119987.2**

(22) Anmeldetag: **14.11.1997**

(54) **Verfahren zur Steuerung von Koordinatenmessgeräten und Koordinatenmessgerät**

Control method for coordinate measuring devices and coordinate measuring device

Méthode de commande de dispositifs de mesure de coordonnées et dispositif de mesure de coordonnées

(84) Benannte Vertragsstaaten:
**DE FR GB IT**

(30) Priorität: **21.12.1996 DE 19653771**

(43) Veröffentlichungstag der Anmeldung:
**24.06.1998 Patentblatt 1998/26**

(73) Patentinhaber:
• **Carl Zeiss**
  **89518 Heidenheim (Brenz) (DE)**
  Benannte Vertragsstaaten:
  **DE FR IT**
• **Carl-Zeiss-Stiftung trading as Carl Zeiss**
  **89518 Heidenheim (Brenz) (DE)**
  Benannte Vertragsstaaten:
  **GB**

(72) Erfinder:
• **Bernhardt, Ralf**
  **73431 Aalen (DE)**
• **Ruck, Otto**
  **73479 Pfahlheim (DE)**
• **Grupp, Günter**
  **89558 Böhmenkirch (DE)**

(56) Entgegenhaltungen:
**EP-A- 0 364 057**          **DE-A- 4 212 455**
**DE-A- 4 436 507**          **US-A- 5 073 748**
**US-A- 5 509 848**

EP 0 849 654 B1

**Beschreibung**

Die Erfindung betrifft ein Verfahren zur Steuerung von Koordinatenmeßgeräten, bei dem ein Tastkopf mit einem daran beweglich befestigten Taster verfahren wird und bei dem der Taster mit einer Meßkraft gegenüber dem Tastkopf beaufschlagt wird, sowie ein entsprechendes Koordinatenmeßgerät.

Ein derartiges Verfahren ist beispielsweise aus der deutschen Patentschrift DE 42 12 455 C2 bekannt. Bei diesem bekannten Verfahren werden Geometriedaten von Geometrieelementen des Werkstücks in Form von Solldaten von einem Rechner an die Steuerung des Koordinatenmeßgerätes übergeben. In der Steuerung werden die Solldaten in das Maschinenkoordinatensystem transformiert und anschließend an einen Interpolator gegeben, der die Lagesollwerte generiert, auf denen der Tastkopf mit dem daran beweglich befestigen Taster gesteuert verfahren wird. Außerdem wird in einem Ausführungsbeispiel zusätzlich von dem besagten Rechner an die Steuerung des Koordinatenmeßgeräts eine Sollmeßkraft übergeben, aufgrund derer ein Kraftregler den Taster laufend mit einer Meßkraft gegenüber dem Tastkopf beaufschlagt, die dem Betrag nach konstant ist und immer normal auf die zu vermessende Oberfläche des Werkstückes steht.

Die Besonderheit des hierin gezeigten Verfahrens ist darin zu sehen, daß der Betrag der eingestellten Meßkraft während des gesamten Meßablaufes konstant ist und der vorgegebenen Sollmeßkraft entspricht. Die tatsächliche Tastkraft, mit der die Tastkugel des Tasters an die Oberfläche des zu vermessenden Werkstückes angepreßt wird verändert sich jedoch bedingt durch Massenträgheitskräfte die bei Beschleunigungen des Tasters auftreten. Insbesondere beim Abtasten von gekrümmten Oberflächenabschnitten des Werkstückes treten Zentrifugalbeschleunigungen auf, die bei konkaven Krümmungen in Richtung der Meßkraft wirken, so daß die tatsächliche Kraft, mit der die Kugel des Tasters auf die Oberfläche des zu vermessenden Werkstückes gepreßt wird sich erhöht. Bei konvexen Krümmungen wirken die Zentrifugalbeschleunigungen der Meßkraft entgegen und verringern somit die tatsächliche Kraft mit der die Kugel des Tasters auf die Oberfläche des zu vermessenden Werkstückes gepreßt wird. Beim schnellen Abfahren von konvexen Krümmungen kann sogar die Zentrifugalkraft die aufgeschaltete Meßkraft übersteigen, so daß hierdurch der Taster, bzw. die hieran befestigte Kugel von der Werkstückoberfläche abhebt. In jedem Falle werden durch die besagten Wirkungen die Meßergebnisse verfälscht, so daß zur Vermeidung der besagten Effekte die Bahngeschwindigkeit des Tasters vor dem Erreichen von gekrümmten Oberflächenabschnitten des Werkstückes stark vermindert wurden, wie dies beispielsweise detailliert in der nachveröffentlichten deutschen Patentanmeldung DE 195 29 547.1 beschrieben ist.

Die Verminderung der Bahngeschwindigkeit führt jedoch insbesondere bei Werkstücken, die viele Krümmungen aufweisen, wie beispielsweise Zahnräder, Wellen, Motorblöcke etc. zu hohen Meßzeiten.

Das US-Patent 5,509,848 zeigt eine Poliervorrichtung zum polieren von lackierten Automobilkarosserien mit einem Roboterarm und einem hiervon getragenen Polierkopf. Die Längsachse des Polierkopfes muss hierbei immer normal auf die zu polierende Fläche des Werkstückes stehen. Damit dies auch für unterschiedlich ausgerichtete Flächen möglich ist, weist der Roboterarm ein Drehgelenk auf, über das der Polierkopf schwenkbar gelagert ist, so dass dieser aus einer vertikalen Ausrichtung in eine horizontale Ausrichtung verschwenkt werden kann. Außerdem ist der Polierkopf zur Erzeugung einer geeigneten Anpresskraft am Ende des Roboterarms über einen Druckluftkolben befestigt, der die Anpresskraft erzeugt. Da in der vertikalen Ausrichtung sowohl die durch die Druckluft erzeugte Kraft, wie auch die Gewichtskraft des Polierkopfes wirkt, während in einer horizontalen Ausrichtung nur die durch die Druckluft erzeugte Kraft wirkt, wird'die Druckluft bei einem verschwenken aus der vertikalen Ausrichtung entsprechend dem Schwenkwinkel erhöht, um den Anpressdruck konstant zu halten.

Die Druckschrift EP-A-0 364 057 zeigt eine Werkzeugmaschine zur Bearbeitung von Werkstückoberflächen, bei der das Werkzeug mit einer vorwählbaren Kraft in Richtung der Werkzeuglängsachse auf die Werkstückoberfläche aufgedrückt werden kann. Das Werkzeug wird hierbei in einer zur Werkzeuglängsachse senkrechten Vorzugsrichtung verfahren, wobei bei einer Neigung der Werkstückoberfläche gegenüber der Vorzugsmessrichtung in Abhängigkeit vom Tangens des Winkels der Werkstückoberfläche gegenüber der Vorzugsrichtung und in Abhängigkeit von der Verfahrgeschwindigkeit in der Vorzugsrichtung eine Korrekturkraft aufgeschaltet wird.

Die Druckschrift DE 44 36 507 A zeigt ein Korrekturverfahren für Koordinatenmessgeräte, bei dem die aufgrund der Beschleunigung der Messschlitten auftretende dynamische Verbiegung der Messschlitten des Koordinatenmessgerätes durch Korrekturwerte korrigiert wird.

Aufgabe der vorliegenden Erfindung ist es deshalb, ein Verfahren zur Steuerung von Koordinatenmeßgeräten vorzuschlagen, bei dem die Meßzeit stark verringert werden kann.

Die Aufgabe wird gemäß den Merkmalen der Ansprüche 1 und 5 gelöst.

Der gemeinsame Grundgedanke der Erfindung ist darin zu sehen, daß sich die aufgeschaltete Meßkraft ($\vec{F}$mess) zusammensetzt

-    aus einer dem Betrag nach konstanten, normal auf die Oberfläche der zu vermessenden Werkstückes (15) gerichteten Sollmeßkraft ($\vec{F}$soll) und
-    einer Korrekturmeßkraft ($\vec{F}$korr), die der zumindest teilweisen Kompensation von durch die Beschleunigung des Tasters (24) auftretenden Massenträgheitskräfte ($\vec{F}$ tr, $\vec{F}$ zp)dient.

Der besondere Vorteil des Verfahrens ist insbesondere darin zu sehen, daß auch gekrümmte Oberflächenabschnitte mit einer relativ hohen Bahngeschwindigkeit abgetastet werden können, ohne daß sich hierdurch die Kraft ändert, mit der die am Taster befestigte Kugel auf die Werkstückoberfläche gepreßt wird. Hierdurch kann die Meßzeit insbesondere bei Werkstücken mit einer Vielzahl von gekrümmten Oberflächenabschnitten, wie beispielsweise Zahnrädern, Zylindern, Motorblöcken, etc. erheblich schneller vermessen werden, als dies bisher möglich war.

Die Ermittlung der Korrekturmeßkraft kann hierbei auf unterschiedliche Weise erfolgen. Eine Möglichkeit besteht beispielsweise darin beim Auftreten von Massenträgheitskräften, eine dem Betrag nach konstante Korrekturmeßkraft vorzugeben, die von ihrer Richtung her der Massenträgheitskraft entgegenwirkt.

Hierdurch können auf einfache Weise in einem Koordinatenmeßgerät Massenträgheitskräfte des Tasters kompensiert werden, so daß die am Taster befestigte Kugel zumindest beim abtasten von konvex gekrümmten Oberflächenabschnitten nicht mehr abheben kann. Das Verfahren weist jedoch den Nachteil auf, daß die auftretenden Massenträgheitskräfte nur sehr undifferenziert korrigiert werden, so daß es hierbei nach wie vor zu Meßfehlern kommt.

In einer besonders bevorzugten Ausführungsform wird die Korrekturmeßkraft proportional zu den besagten Massenträgheitskräfte gewählt, wobei der Proportionalitätsfaktor vorteilhaft so gewählt wird, daß die Richtung der Korrekturmeßkraft genau entgegengesetzt zur resultierenden Massenträgheitskraft ist und der Betrag der Korrekturmeßkraft gleich dem Betrag der resultierenden Massenträgheitskraft ist.

Die Korrekturmeßkraft wird üblicherweise aus der Bahnbeschleunigung des Tastkopfes ermittelt, wobei sich die Bahnbeschleunigung besonders Vorteilhaft entweder aus der zeitlichen Ableitung der gemessenen Maschinenpositionen oder aus der zeitlichen Ableitung der Lagesollwerte ermitteln läßt. Weiterhin ließe sich die Bahnbeschleunigung auch rein qualitativ aus der Krümmung der Bahn abschätzen. Selbstverständlich kann die Beschleunigung auch durch einen Beschleunigungsaufnehmer ermittelt werden, der beispielsweise im Tastkopf untergebracht sein kann.

Weitere Vorteile und Weiterbildungen der Erfindung sind den Figuren zu entnehmen.

Hierin zeigen:

Figur 1 eine einfache Prinzipskizze mit wesentlichen Komponenten der Steuerung eines Koordinatenmeßgerätes, mit dem das erfindungsgemäße Verfahren durchgeführt werden kann;

Figur 2 eine Prinzipskizze eines Abtastvorganges eines Werkstückes mit einer Steuerung gemäß Figur 1.

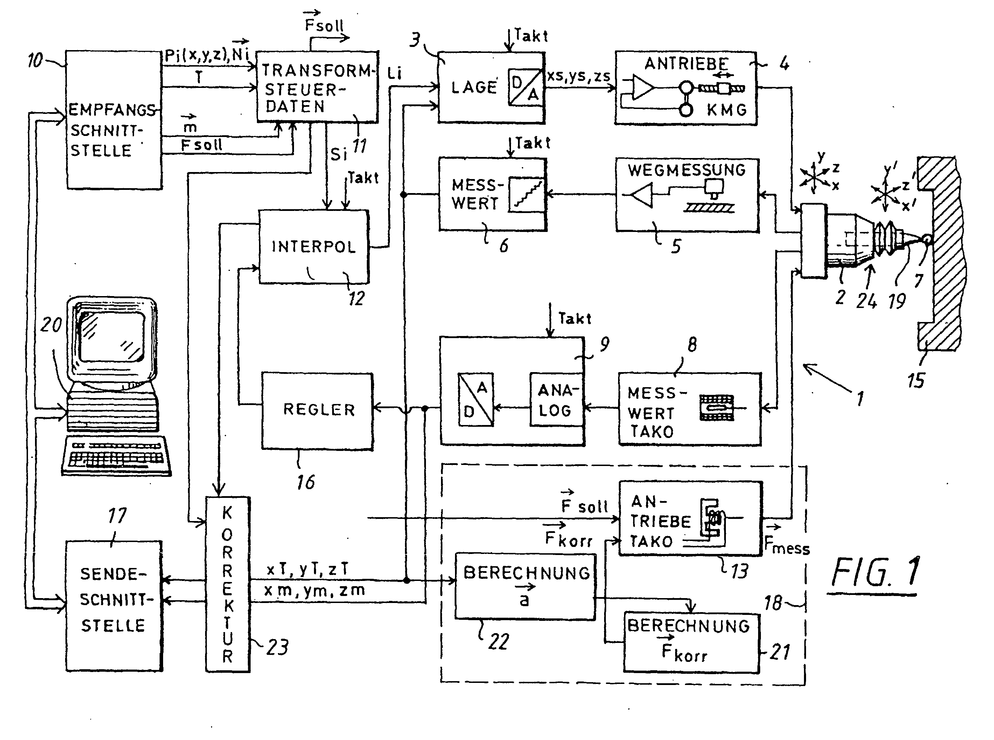

Figur 1 zeigt eine einfache Prinzipskizze der Steuerung (1) eines Koordinatenmeßgerätes, die einen Tastkopf (2) und einen daran beweglich befestigten Taster (24) nach Solldaten gesteuert verfährt.

Bevor die Funktion der Steuerung (1) beschrieben wird, soll an dieser Stelle auf die genaue Definition des Begriffes Taster (24) eingegangen werden. Im Zusammenhang mit der hier gezeigten Steuerung (1) sollen unter dem Begriff Taster (24) all diejenigen Komponenten verstanden werden, die beweglich am Tastkopf (2) befestigt sind. Hierzu zählen bei dem hier nur beispielhaft gezeigten Taster (24) neben dem Taststift (19) und der Tastkugel (7) auch die nicht gezeigte Wechselhalterung, über die der Taststift (19) auswechselbar am Tastkopf (2) befestigt ist, die Mechanik die den Taststift (19), die Tastkugel (7) und die Wechselhalterung beweglich am Tastkopf (2) lagert, die Tauchspulen der Meßkraftgeneratoren sowie die Tauchspulen, die der Messung der Taststiftauslenkung dienen.

Die genaue Funktion des Koordinatenmeßgeräts soll nun im folgenden erläutert werden. Die Steuerung (1) des Koordinatenmeßgerätes ist über die Eingangsschnittstelle (10) und die Sendeschnittstelle (17) mit dem Auswerterechner (20) des Koordinatenmeßgerätes verbunden. Über die Eingangsschnittstelle (10) werden vom Rechner (20) u.a. folgende Daten an die Steuerung (1) übergeben:

a) die Transformationsmatrix (T), die die Lage des Werkstückkcordinatensystems (WKS) im Maschinenkoordinatensystem (MKS) des Koordinatenmeßgeräts beschreibt;

b) der Vektor ($\vec{m}$), der die Ablage des Mittelpunkts der verwendeten Tastkugel (7) im Maschinenkoordinatensystem (MKS) von einem Bezugspunkt am Tastkopf (2) des Koordinatenmeßgeräts beschreibt;

c) der Betrag der Sollmeßkraft (Fsoll), die der Taststift (19) bzw. die daran befestigte Tastkugel (7) auf das abzutastende Werkstück (15) ausüben soll.

Außerdem werden über die Eingangsschnittstelle (10) die Informationen übergeben, die zur Beschreibung der von dem Taststift (19) bzw. der daran befestigten Tastkugel (7) abzufahrenden Sollkontur erforderlich sind. Das sind beispielsweise Punktefolgen (Pi (x, y, z)). Gleichzeitig können auch, soweit vorhanden, für die einzelnen Punkte (Pi (x, y, z)) jeweils zugeordnete Normalenvektoren ($\vec{N}$i) übergeben werden, die die normale Richtung auf die Oberfläche des zu vermessenden Werkstückes (15) an den betreffenden Punkten beschreiben.

Das wichtigste Bauelement der Steuerung (1) sind ein oder mehrere Mikroprozessoren. Demzufolge sind einige der in Figur 1 bezeichneten Funktionsbaugruppen nicht in Hardware realisiert, sondern Teil der Firmware dieser Mikroprozessoren. Das gilt beispielsweise auch für die auf die Eingangsschnittstelle (10) folgende Funktionsbaugruppe (11) "Transformation Steuerdaten". Die Funktionsbaugruppe (11) "Transformation Steuerdaten" berechnet aus den erhaltenen Informationen die Bahndaten, mit denen die Tastkugel (7) gegenüber dem Werkstück (15) verfahren wird. Diese Bahndaten werden durch eine Koordinatentransformation in das Steuersystem, d.h. das Maschinenkoordinatensystem (MKS) übertragen.

In der Funktionsbaugruppe (12) "Interpolation" werden im steuereigenen Systemtakt die aufbereiteten diskreten abzufahrenden Bahndaten (Si) nach einem vorgegebenen Algorithmus, beispielsweise linear oder nach einem Spline-Algorithmus interpoliert und Lagesollwerte (Li) an den nachgeordneten Lageregler (3) für die Antriebe der drei Meßachsen des Koordinatenmeßgerätes übergeben.

Die im Lageregler (3) erzeugten Lagesollwerte werden anschließend von digital nach analog gewandelt und als analoge Stellgrößen an die drei Antriebe (4) für die x-, y- und z-Achse des Koordinatenmeßgerätes übergeben. Ebenfalls an den Lageregler (3) angeschlossen sind die Wegmeßsysteme (5) des Koordinatenmeßgerätes und zwar über die Funktionsbaugruppe (6) Meßwerterfassung. Diese Funktionsbaugruppe (6) sorgt für eine zyklische Erfassung der Maschinenpositionen (xm, ym, zm), also der Position des Tastkopfs (2) im Maschinenkoordinatensystem (MKS) und schließt den Positionsregelkreis für die drei Meßachsen des Koordinatenmeßgeräts.

Die Steuerung (1) nach Figur 1 enthält ebenfalls die Elektronik (8) zur Weiterverarbeitung der von den Meßwertgebern im Tastkopf (2) abgegebenen Signale, die das Auslenken des Tasters (24) beim Kontakt der am Taststift (19) befestigten Tastkugel (7) mit dem Werkstück (15) in den drei Raumrichtungen beschreiben. Die von diesen Meßwertgebern kommenden und in der Elektronik (8) aufbereiteten Lagesignale werden in der Funktionsbaugruppe (9) in digitale Signale, im folgenden die Tasterauslenkung (xT, yT, zT) umgewandelt. Die Tasterauslenkung (xT, yT, zT) ist ebenso wie die Maschinenpositionen (xm, ym, zm) über eine noch weiter unten zu beschreibende Funktionsbaugruppe (23) "Korrektur" auf die Sendeschnittstelle (17) gelegt und werden vom Rechner (20) zur Berechnung des Meßergebnisses benötigt.

Außerdem weist die Steuerung (1) einen mit der Funktionsbaugruppe (9) verbundenen Regler (16) auf, der die Tasterauslenkung (xT, yT, zT), die die Auslenkung des Taststifts in den drei Raumrichtungen beschreibt, überwacht. Überschreitet die Tasterauslenkung (xT, yT, zT) gewisse vorgegebene Werte, so schaltet der Regler (16) auf die Funktionsbaugruppe (12) "Interpolator" eine Störgröße, durch die die Bahn derart korrigiert wird, daß die Auslenkung des Tasters (24) wieder in den zulässigen Bereich zurückgeführt wird.

Im folgenden soll nun der Kraftregler (18) beschrieben werden mit dem das erfindungsgemäße Verfahren durchgeführt werden kann.

Der in der Steuerung (1) angeordnete Kraftregler (18) stellt die Beaufschlagung des Tasters (24) mit einer Meßkraft ($\vec{F}$mess) gegenüber dem Tastkopf (2) ein, wobei sich die Meßkraft ($\vec{F}$mess) zusammensetzt

- aus einer dem Betrag nach konstanten, normal auf die Oberfläche des zu vermessenden Werkstückes (15) gerichteten Scllmeßkraft ($\vec{F}$soll) und
- einer Korrekturmeßkraft ($\vec{F}$korr), die der zumindest teilweisen Kompensation von durch die Beschleunigung des Tasters (24) auftretenden Massenträgheitskräfte ($\vec{F}$tr, $\vec{F}$zp) dient.

Zum Erzeugen der Meßkraft sind im Tastkopf (2) entweder, wie im hier gezeigten Ausführungsbeispiel gemäß Figur 1, einstellbare Meßkraftgeneratoren oder aber Federn, die eine der Auslenkung des Tasters (24) in den Meßrichtungen (x, y, z) proportionale Meßkraft erzeugen, vorgesehen.

Die hier verwendeten Meßkraftgeneratoren, sind in Form von z.B. Linearmotoren oder Tauchspulenmagneten realisiert. Die Meßkraftgeneratoren lenken den Taster (24) auf ein vorgegebenes Signal ($\vec{F}$mess) hin in den drei Raumrichtungen (x, y, z) aus. Die entsprechende Funktionsbaugruppe (13) "Antriebe Tako" erhält die Information über Betrag und Richtung der einzustellenden Meßkraft ($\vec{F}$mess) sowohl von der Funktionsbaugruppe (11) "Transformation Steuerdaten" in Form des Signals einer Sollmeßkraft ($\vec{F}$soll), wie auch von der Funktionsbaugruppe (21) "Berechnung Korrekturmeßkraft" in Form eines Signals, das die Korrekturmeßkraft ($\vec{F}$korr) angibt.

Das Signal für die Sollmeßkraft ($\vec{F}$soll) gibt für jede der drei Raumrichtungen (x, y, z) Richtung und Betrag der einzustellenden Meßkraft an, so daß die hierdurch eingestellte Meßkraft ($\vec{F}$mess) normal auf die Oberfläche des zu vermessenden Werkstückes (15) steht und der Betrag der hieraus resultierenden Meßkraft dem Betrag des durch den Rechner (20) an die Funktionsbaugruppe (11) "Transformation Steuerdaten" übergebenen Wertes der Sollmeßkraft ($\vec{F}$soll) entspricht. Das an der Funktionsbaugruppe (13) "Antriebe Tako" anliegende Signal des Sollmeßkraft ($\vec{F}$soll) wird in der Funktionsbaugruppe (11) "Transformation Steuerdaten" über den vom Rechner (20) eingegebenen Betrag der Sollmeßkraft ($\vec{F}$soll) und aus den zu den einzelnen Punkten (Pi) gehörenden Normalenvektoren ($\vec{N}$i) generiert.

Darüberhinaus wird die Meßkraft ($\vec{F}$mess) durch die Funktionsbaugruppe (13) "Antriebe Tako" zusätzlich auf Basis des Signales für die Korrekturmeßkraft ($\vec{F}$korr) eingestellt, die der Sollmeß-

kraft ($\vec{F}$soll) überlagert wird. Auch die Korrekturmeßkraft ($\vec{F}$korr) gibt für jede der drei Raumrichtungen (x, y, z) nach Betrag und Richtung die zusätzlich aufzuschaltende Korrekturmeßkraft vor. Das Signal der Korrekturmeßkraft ($\vec{F}$korr) wird hierbei durch die Baugruppen (22) "Berechnung Bahnbeschleunigung" und durch die Funktionsbaugruppe (21) "Berechnung Korrekturmeßkraft" wie folgt ermittelt.

Die Funktionsbaugruppe (22) "Berechnung Bahnbeschleunigung" ermittelt aus den durch die Funktionsbaugruppe (6) "Meßwerterfassung" erfaßten Maschinenpositionen (xm, ym, zm) für jede der Raumrichtungen (x, y, z) die zweite Ableitung nach der Zeit, so daß hierdurch ein dreidimensionaler Bahnbeschleunigungsvektor ($\vec{a}$) ermittelt wird:

$$\vec{a} = ( \frac{d^2x}{dt^2} ; \frac{d^2y}{dt^2} ; \frac{d^2z}{dt^2})$$

Der so berechnete Bahnbeschleunigungsvektor ($\vec{a}$) wird dann an die Funktionsbaugruppe (21) "Berechnung Korrekturmeßkraft" weitergegeben, in der der Bahnbeschleunigungsvektor ($\vec{a}$) mit der Tastermasse (mtast) wie folgt multipliziert wird,

$$\vec{F}korr = mtast * \vec{a}$$

um hierdurch einen Vektor für die Korrekturmeßkraft ($\vec{F}$korr) zu erhalten.

Die Tastermasse (mtast) ist hierbei die Gesamtmasse des Tasters (24) und kann wie folgt ermittelt werden. Das Koordinatenmeßgerät mit dem ungeklemmten Taster (24) wird so verfahren, daß der Taster (24) einer sowohl richtungs- wie auch betragsmäßig konstanten Bahnbeschleunigung ($\vec{a}$tm) ausgesetzt ist, wobei hierbei die Kraft ($\vec{F}$halt) gemessen wird, die benötigt wird, um den Taster (24) in seiner Ruheposition zu halten. Über die Beziehung

$$mtast = \frac{\vec{F}halt}{\vec{a}tm}$$

läßt sich dann einfach die Tastermasse (mtast) errechnen. Es gilt hierbei, wie bereits oben ausgeführt, zu beachten, daß in die Tastermasse (mtast) nicht ausschließlich der Taststift (19) und die Tastkugel (7) eingehen, sondern gleichfalls alle hiermit festverbundenen Teile, die beweglich gegenüber dem Tastkopf (2) gelagert sind.

Der berechnete Vektor der Korrekturmeßkraft ($\vec{F}$korr) wird hierbei, wie bereits beschrieben an die Funktionsbaugruppe (13) "Antriebe Tako" übergeben und hierin mit der Sollmeßkraft ($\vec{F}$soll) durch eine Vektor-Addition überlagert und der hieraus resultierende Vektor der Meßkraft ($\vec{F}$mess) verwendet, um den Taster (24) mit der besagten Meßkraft ($\vec{F}$mess) gegenüber dem Tastkopf (2) zu beaufschlagen.

Da die in der Funktionsbaugruppe (21) "Berechnung Korrekturmeßkraft" berechnete Korrekturmeßkraft ($\vec{F}$mess) betragsmäßig identisch der durch die Bahnbeschleunigung ($\vec{a}$) erzeugten Massenträgheitskraft ($\vec{F}$tr, $\vec{F}$zp) entspricht und richtungsmäßig genau entgegengesetzt zur Massenträgheitskraft ($\vec{F}$tr, $\vec{F}$zp) wirkt, stellt also der Kraftregler (18) die Korrekturmeßkraft ($\vec{F}$korr) proportional zu den besagten Massenträgheitskräfte ($\vec{F}$tr, $\vec{F}$zp) ein, wobei der Kraftregler (18) die Korrekturmeßkraft ($\vec{F}$korr) aus der Bahnbeschleunigung ($\vec{a}$) des Tastkopfes (2) bestimmt. Die Bahnbeschleunigung ($\vec{a}$) kann dabei entweder wie in der Steuerung (1) gemäß Figur 1 aus der zeitlichen Ableitung der gemessenen Maschinenpositionen (xm, ym, zm) oder aber genauso gut auch aus der zeitlichen Ableitung der Bahnstützpunkte (Li) ermittelt werden.

Selbstverständlich kann die Beschleunigung auch durch einen Beschleunigungsaufnehmer ermittelt werden, der beispielsweise im Tastkopf untergebracht sein kann. Es sind hierbei seismische oder piezoelektrische Beschleunigungsaufnehmer denkbar.

Die bei beschleunigten Bewegungen des Tasters (24) bzw. des Tastkopfes (2) auftretenden Massenträgheitskräfte verursachen jedoch neben einer Veränderung der Meßkraft ($\vec{F}$mess) auch Durchbiegungen der Komponenten des Koordinatenmeßgerätes wie insbesondere des Taststiftes (19) und der Mimik, an der der Tastkopf (2) aufgehängt ist. Selbst wenn keine Massenträgheitskräfte auftreten, kann der Taststift (19) alleine schon aufgrund der anliegenden Meßkraft ($\vec{F}$mess) verbogen werden. Es ist deshalb besonders vorteilhaft in der Steuerung (1) gemäß Figur 1 eine Funktionsbaugruppe (23) "Korrektur" vorzusehen, in der die Tasterauslenkung (xT, yT, zT) sowie die Maschinenpositionen (xm, ym, zm) entsprechend einer vorher abgespeicherten Korrekturtabelle in Abhängigkeit von den Lagesollwerte (Li) und den Daten der Baugruppe 11 "Transformation Steuerdaten" korrigiert werden. Die genaue Vorgehensweise zur Korrektur der entsprechenden Signale ist beispielsweise detailliert in den Offenlegungsschriften DE 44 36 507 A1 und DE 195 18 268 A1 der Patentanmelderin beschrieben, auf die hiermit ausdrücklich Bezug genommen wird.

Es ist somit also eine Funktionsbaugruppe (23) vorgesehen, die sowohl die statische, wie auch die dynamische Biegung des Taststiftes (19) und der Mimik des Koordinatenmeßgerätes korrigiert.

Weitere Informationen zu einzelnen Funktionsbaugruppen der beschriebenen Steuerung (1) befinden sich in der eingangs genannten DE 42 12 455 C2 der Anmelderin, auf die an dieser Stelle ausdrücklich Bezug genommen wird.

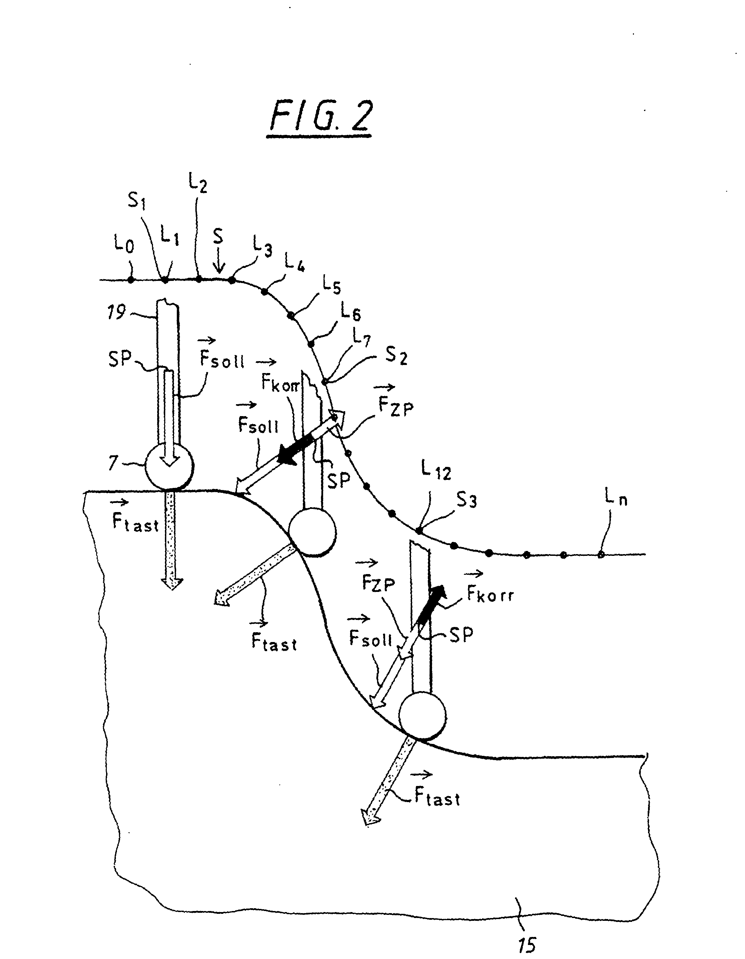

Die genaue Funktionsweise der Steuerung 1 soll im folgenden anhand von Figur 2 noch einmal verdeutlicht werden. Mit S ist hierbei die Bahn bezeichnet, auf der die Tastkugel (7) verfahren werden soll. (S1, S2, S3,...) sind hierbei die einzelnen Bahndaten (Si), die von der Funktionsbaugruppe 11 "Transformation Steuerdaten" an die Funktionsbaugruppe (12) "Interpolation" übergeben wurden, wobei die Funktionsbaugruppe (12) "Interpolation" dann zwischen den Bahndaten (S1, S2, S3,...) wie oben beschrieben die Lagesollwerte (L1, L2,...) berechnet auf denen die Tastkugel (7) in einem fest vorgegebenen Zeittakt von Lagesollwert (Li) zu Lagesollwert (Li+1) verfährt. Wie aus der Figur 2 ersichtlich, befindet sich die Tastkugel (7) am Lagesollwert (L1) in einer Bewegung mit konstanter Geschwindigkeit, so daß keine Massenträgheitskräfte auftreten. Der Taster (24) wird hier deshalb nur mit der Betragsmäßig konstanten und normal auf die Oberfläche des WerkStükkes (15) wirkenden Sollmeßkraft ($\vec{F}$soll) beaufschlagt. Die Kraft ($\vec{F}$tast), mit der die Tastkugel (7) auf die Werkstückoberfläche des Werkstückes (15) aufgepreßt wird entspricht deshalb betrags- und richtungsmäßig der Sollkraft ($\vec{F}$soll). Am Lagesollwert (L6) wird der Taster (24) über einen konkav gekrümmten Oberflächenabschnitt des Werkstückes (15) geführt, so daß hierbei eine Massenträgheitskraft in Form einer Zentrifugalkraft ($\vec{F}$zp) auftritt. Die Baugruppen (22) "Berechnung Bahnbeschleunigung" und (21) "Berechnung Korrekturmeßkraft" ermitteln deshalb wie oben detailliert beschrieben eine Korrekturmeßkraft ($\vec{F}$korr), die zusätzlich zur normale auf die Werkstückoberfläche stehende Sollmeßkraft ($\vec{F}$soll) aufgeschaltet wird, so daß sich die resultierende Meßkraft ($\vec{F}$mess) aus der Sollmeßkraft ($\vec{F}$soll) und der Korrekturmeßkraft ($\vec{F}$korr) zusammensetzt. Da die Korrekturmeßkraft ($\vec{F}$korr) die Zentrifugalkraft ($\vec{F}$zp) kompensiert entspricht die tatsächlich wirkende Kraft ($\vec{F}$tast), mit der die Tastkugel (7) auf der Werkstückoberfläche angepreßt wird folglich der Sollmeßkraft ($\vec{F}$soll). Analog verhält sich die Situation im Lagesollwert (L12) mit dem einzigen Unterschied, daß hier ein konkav gekrümmter Oberflächenabschnitt vermessen wird, so daß eine Zentrifugalkraft ($\vec{F}$zp) auf die Oberfläche zu gerichtet ist, während die Korrekturmeßkraft ($\vec{F}$korr) von der Werkstückoberfläche wegzeigt.

**Patentansprüche**

1. Verfahren zur Steuerung von Koordinatenmeßgeräten, bei dem ein Tastkopf(2) mit einem daran beweglich befestigten Taster (24) verfahren wird und bei dem der Taster (24) mit einer Meßkraft ($\vec{F}$mess) gegenüber dem Tastkopf (2) beaufschlagt wird, wobei sich die Meßkraft ($\vec{F}$mess) zusammensetzt

   - aus einer dem Betrag nach konstanten, normal auf die Oberfläche der zu vermessenden Werkstückes (15) gerichteten Sollmeßkraft ($\vec{F}$soll) und
   - einer Korrekturmeßkraft ($\vec{F}$korr), die der zumindest teilweisen Kompensation von durch die Beschleunigung des Tasters (24) auftretenden Massenträgheitskräfte ($\vec{F}$tr, $\vec{F}$zp) dient.

2. Verfahren nach Anspruch 1, wobei die Korrekturmeßkraft ($\vec{F}$korr) proportional zu den besagten Massenträgheitskräfte ($\vec{F}$tr, $\vec{F}$zp) gewählt wird.

3. Verfahren nach Ansprüchen 1-2, wobei die Korrekturmeßkraft ($\vec{F}$korr) aus der Bahnbeschleunigung ($\vec{a}$) des Tastkopfes (2) bestimmt wird.

4. Verfahren nach Anspruch 3, wobei die Bahnbeschleunigung ($\vec{a}$) des Tastkopfes (2) entweder aus der zeitlichen Ableitung der gemessenen Maschinenpositionen (xm, ym, zm) oder aus der zeitlichen Ableitung der Lagesollwerte (Li) ermittelt wird.

5. Koordinatenmeßgerät mit

   - einer Steuerung (1), die einen Tastkopf (2) und einen daran beweglich befestigten Taster (24) verfährt
   - einem Kraftregler (18), der die Beaufschlagung des Tasters (24) mit einer Meßkraft ($\vec{F}$mess) gegenüber dem Tastkopf (2) einstellt, wobei sich die Meßkraft ($\vec{F}$mess) zusammensetzt
   - aus einer dem Betrag nach konstanten, normal auf die Oberfläche des zu vermessenden Werkstückes (15) gerichteten Sollmeßkraft ($\vec{F}$soll) und
   - einer Korrekturmeßkraft ($\vec{F}$korr), die der zumindest teilweisen Kompensation von durch die Beschleunigung des Tasters (24) auftretenden Massenträgheitskräfte ($\vec{F}$tr, $\vec{F}$zp) dient.

6. Koordinatenmeßgerät nach Anspruch 5, wobei die Korrekturmeßkraft ($\vec{F}$korr) durch den Kraftregler (18) ermittelbar ist und proportional zu den besagten Massenträgheitskräfte ($\vec{F}$tr, $\vec{F}$zp) gewählt wird.

7. Koordinatenmeßgerät nach Ansprüchen 5-6, wobei der Kraftregler (18) die Korrekturmeßkraft ($\vec{F}$korr) aus der Bahnbeschleunigung ($\vec{a}$) des Tastkopfes (2) bestimmt.

8. Koordinatenmeßgerät nach Anspruch 7, wobei der Kraftregler (18) die Bahnbeschleunigung ($\vec{a}$) entweder aus der zeitlichen Ableitung der gemessenen Maschinenpositionen (xm, ym, zm) oder aus der zeitlichen Ableitung der Lagesollwerte (Li) ermittelt.

9. Koordinatenmeßgerät nach Anspruch 5, wobei der Tastkopf (2) zum Erzeugen der Meßkraft entweder einstellbare Meßkraftgeneratoren umfaßt oder Federn, die eine der Auslenkung des Tasters (24) in den Meßrichtungen (x, y, z) proportionale Meßkraft erzeugen.

**10.** Koordinatenmeßgerät nach Anspruch 5, wobei eine Funktionsbaugruppe (23) vorgesehen ist, die die statische und dynamische Biegung des Taststiftes (19) und der Mechanik zur Bewegung des Tastkopfes (2) korrigiert.

**Claims**

**1.** Method for controlling coordinate measuring machines, in the case of which a probe head (2) having a probe (24) movably mounted thereon is moved, and in the case of which a measuring force ($\vec{F}$mess) is applied to the probe (24) in relation to the probe head (2), the measuring force ($\vec{F}$mess) being composed

- of a desired measuring force ($\vec{F}$soll) of constant magnitude and directed normal to the surface of the workpiece (15) to be measured, and
- of a correction measuring force ($\vec{F}$korr) which serves to compensate at least partially mass inertia forces ($\vec{F}$tr, $\vec{F}$zp) occurring as a result of the acceleration of the probe (24).

**2.** Method according to Claim 1, in which the correction measuring force ($\vec{F}$korr) is selected to be proportional to the said mass inertia forces ($\vec{F}$tr, $\vec{F}$zp).

**3.** Method according to Claims 1 - 2, in which the correction measuring force ($\vec{F}$korr) is determined from the track acceleration ($\vec{a}$) of the probe head (2).

**4.** Method according to Claim 3, in which the track acceleration ($\vec{a}$) of the probe head (2) is determined either from the time derivative of the measured machine positions (xm, ym, zm) or from the time derivative of the desired positional values (Li).

**5.** Coordinate measuring machine having

- a controller (1) which moves a probe head (2) and a probe (24) movably mounted thereon,
- a force controller (18) which sets the application of a measuring force ($\vec{F}$mess) to the probe (24) in relation to the probe head (2), the measuring force ($\vec{F}$mess) being composed
- of a desired measuring force ($\vec{F}$soll) of constant magnitude and directed normal to the surface of the workpiece (15) to be measured, and
- of a correction measuring force ($\vec{F}$korr) which serves to compensate at least partially mass inertia forces ($\vec{F}$tr,$\vec{F}$zp) occurring as a result of the acceleration of the probe (24).

**6.** Coordinate measuring machine according to Claim 5, in which the correction measuring force ($\vec{F}$korr) can be determined by the force controller (18), and is selected to be proportional to the said mass inertia forces ($\vec{F}$tr, $\vec{F}$zp).

**7.** Coordinate measuring machine according to Claims 5 - 6, in which the force controller (18) determines the correction measuring force ($\vec{F}$korr) from the track acceleration ($\vec{a}$) of the probe head (2).

**8.** Coordinate measuring machine according to Claim 7, in which the force controller (18) determines the track acceleration ($\vec{a}$) either from the time derivative of the measured machine positions (xm, ym, zm) or from the time derivative of the desired positional values (Li).

**9.** Coordinate measuring machine according to Claim 5, in which in order to generate the measuring force the probe head (2) either comprises measuring force generators which can be set, or springs which generate a measuring force proportional to the deflection of the probe (24) in the measuring directions (x, y, z).

**10.** Coordinate measuring machine according to Claim 5, in which a function module (23) is provided which corrects the static and dynamic bending of the feeler (19) and the mechanics for moving the probe head (2).

**Revendications**

**1.** Procédé de contrôle d'appareils de mesure de coordonnées dans lequel une tête de palpage (2) avec un palpeur (24) qui s'y trouve fixé avec une aptitude de mobilité est déplacée et dans lequel le palpeur (24) est exposé à une force de mesure ($\vec{F}$mess) par rapport à la tête de palpage (2), la force mesurée ($\vec{F}$mess) se composant

- d'une force de mesure de consigne ($\vec{F}$soll) de valeur constante dirigée normalement sur la surface de la pièce à mesurer (15),
- d'une force de mesure de correction (Fkorr) qui sert à la compensation au moins partielle de forces d'inertie de masse ($\vec{F}$tr, $\vec{F}$zp) apparaissant du fait de l'accélération du palpeur (24).

**2.** Procédé selon la revendication 1, dans lequel la force de mesure de correction ($\vec{F}$korr) est choisie proportionnellement auxdites forces d'inertie de masse ($\vec{F}$tr, $\vec{F}$zp).

**3.** Procédé selon les revendications 1-2, dans lequel la force de mesure de correction ($\vec{F}$korr) est déterminée à partir de l'accélération en trajectoire ($\vec{a}$) de la tête de palpage (2).

**4.** Procédé selon la revendication 3, dans lequel l'accélération en trajectoire ($\vec{a}$) de la tête de palpage (2) est déterminée soit à partir de l'écart dans le temps des positions de machine mesurées (xm, ym, zm) soit de l'écart dans le temps des valeurs de consigne de position (Li).

**5.** Appareil de mesure de coordonnées comprenant

- une commande (1) qui déplace une tête de palpage (2) et un palpeur (24) qui s'y trouve fixé avec une aptitude de mobilité,
- un régulateur de force (18) qui règle l'exposition du palpeur (24) à une force de mesure ($\vec{F}$mess) par rapport à la tête de palpage (2), la force de mesure ($\vec{F}$mess) se composant
- d'une force de mesure de consigne ($\vec{F}$soll) de valeur constante dirigée normalement sur la surface de la pièce à mesurer (15),
- d'une force de mesure de correction ($\vec{F}$korr) qui sert à la compensation au moins partielle de forces d'inertie de masse ($\vec{F}$tr, $\vec{F}$zp) apparaissant du fait de l'accélération du palpeur (24).

**6.** Appareil de mesure de coordonnées selon la revendication 5, dans lequel la force de mesure de correction ($\vec{F}$korr) peut être déterminée par le régulateur de force (18) et est choisie proportionnellement auxdites forces d'inertie de masse ($\vec{F}$tr, $\vec{F}$zp).

**7.** Appareil de mesure de coordonnées selon les revendications 5-6, dans lequel le régulateur de force (18) détermine la force de mesure de correction ($\vec{F}$korr) à partir de l'accélération en trajectoire ($\vec{a}$) de la tête de palpage (2).

**8.** Appareil de mesure de coordonnées selon la revendication 7, dans lequel le régulateur de force (18) détermine l'accélération en trajectoire ($\vec{a}$) soit à partir de l'écart dans le temps des positions de machine mesurées (xm, ym, zm) soit de l'écart dans le temps des valeurs de consigne de position (Li).

**9.** Appareil de mesure de coordonnées selon la revendication 5, dans lequel pour produire la force de mesure, la tête de palpage (2) comprend soit des générateurs de force de mesure réglables soit des ressorts, qui produisent une force de mesure proportionnelle à la déviation du palpeur (24) dans les directions de mesure (x, y, z).

**10.** Appareil de mesure de coordonnées selon la revendication 5, dans lequel est prévu un composant fonctionnel (23) qui corrige l'infléchissement statique et dynamique de la pointe de palpage (19) et du mécanisme de mise en mouvement de la tête de palpage (2).

*FIG. 1*

EP 0 849 654 B1

FIG. 2